# FASCICULE DE BREVET EUROPEEN

(11) **EP 0 369 847 B1**
(45) Date de publication et mention de la délivrance du brevet: **13.01.1993**
(21) Numéro de dépôt: 89402934.7
(22) Date de dépôt: 24.10.1989
(51) Int. Cl.: F16C 27/00

(54) **Palier support d'un arbre tournant**
Lager für eine drehende Welle
Bearing supporting a rotating shaft

(30) Priorité: 16.11.1988 FR 8814889
(43) Date de publication de la demande: 23.05.1990
(73) Titulaire: GLAENZER SPICER, F-78301 Poissy (FR)
(72) Inventeur: Moulinet, François, F-78510 Triel s/Seine (FR)
(74) Mandataire: Polus, Camille

(56) Documents cités:
- DE-A- 3 719 795
- DE-B- 1 036 487
- FR-A- 1 461 844
- FR-A- 2 404 378
- GB-A- 979 599
- US-A- 3 018 146

## Description

La présente invention a pour objet un palier support d'un arbre tournant du type comportant une bague intérieure et une bague extérieure coaxiales et des moyens élastiques de liaison entre les deux bagues.

L'invention concerne plus particulièrement un palier support d'une ligne d'arbres de transmission utilisée dans la conception des véhicules automobiles. Ce type de ligne d'arbre est généralement utilisé pour la transmission longitudinale reliant le groupe motopropulseur à la boîte transfert d'un véhicule à quatre roues motrices, ou au pont arrière d'un véhicule à propulsion. Son utilisation n'est toutefois pas limitée à ce type d'application et elle peut être utilisée dans tout autre domaine nécessitant d'assurer une isolation vibratoire d'un arbre en rotation par rapport à la structure à laquelle il est accroché.

Les paliers de type connu généralement utilisés dans la construction automobile reçoivent un roulement à billes et les moyens élastiques sont conçus sous la forme d'un bloc annulaire en matériau élastomère, tel que notamment en caoutchouc naturel, qui relie le roulement à billes à un boîtier support.

Ce type de palier ne permet pas de disposer de caractéristiques élastiques différentes et contrôlées dans les directions axiales et radiales que l'on puisse adapter aux différentes sollicitations que l'on désire maîtriser et/ou aux différentes vibrations dont on désire éviter la transmission à la structure du véhicule. Ce problème est particulièrement aigu dans le cas d'une transmission au moyen d'une ligne d'arbres en deux tronçons, d'une masse donnée et qui est agencée entre deux joints d'extrémité à très libre coulissement axial.

En effet, dans ce cas la ligne d'arbre doit être maintenue de façon quasi-rigide dans la direction axiale alors qu'il est souhaitable de disposer d'un palier support possédant une très grande souplesse et donc d'excellentes caractéristiques d'amortissement dans la direction radiale afin d'éviter que les vibrations de l'arbre en rotation ne soient transmies au châssis, et à l'habitacle du véhicule.

L'invention a donc pour but de proposer un palier support d'un arbre tournant possédant des caractéristiques dynamiques d'amortissement qui soient adaptées et différentes selon les directions axiales et radiales.

Dans ce but l'invention propose un palier support d'un arbre tournant du type comportant une bague intérieure et une bague extérieure coaxiales et entre les deux bagues des premiers moyens élastiques de liaison qui relient un premier bord de la bague extérieure à un premier bord, opposé axialement, de la bague intérieure. Un tel palier support est connu du document US-A-3 018 146. Selon l'invention le palier support est caractérisé en ce que lesdits premiers moyens de liaison comportent une série de premières lames élastiques réparties angulairement, le plan moyen de chacune des premières lames formant un premier angle avec l'axe commun aux deux bagues, et en ce que des seconds moyens élastiques sont réalisés sous la forme d'une série de secondes lames élastiques réparties angulairement qui relient le second bord de la bague extérieure au second bord de la bague intérieure de manière que le plan moyen de chacune des secondes lames forme un second angle par rapport audit axe commun.
Selon d'autres caractéristiques de l'invention :
- chacune des deux séries de lames élastiques comporte un nombre identique de lames élastiques ;
- les lames de chacune des deux séries sont alternées autour de l'axe commun ;
- les premières et secondes lames élastiques sont réparties angulairement de manière régulière autour de l'axe commun ;
- l'une au moins des deux séries de lames comporte au moins un groupe de plusieurs lames agencées consécutivement autour de l'axe commun ;
- le premier angle et le second angle sont égaux ;
- le premier angle et le second angle sont différents ;
- chaque lame possède une longueur au repos égale à la distance séparant les deux bords qu'elle relie ;
- chaque lame possède une longueur au repos supérieure à la distance séparant les deux bords qu'elle relie ;
- les lames et les bagues sont réalisées dans le même matériau ;
- les lames et les bagues sont réalisées en une seule pièce ;
- les moyens de liaison comportent également au moins une série de cales hydro-élastiques qui relient entre elles les surfaces cylindriques en vis-à-vis des deux bagues et ;
- chacune des cales hydro-élastiques est disposée entre deux lames élastiques consécutives.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en élévation d'un premier mode de réalisation d'un palier support réalisé conformément aux enseignements de l'invention ;
- la figure 2 est une vue en coupe selon la ligne 2-2 de la figure 1 ;
- la figure 3 est une vue en coupe selon la ligne 3-3 de la figure 1 ;
- la figure 4 est une vue en élévation d'un second mode de réalisation d'un palier support selon l'invention dans lequel sont prévues, parmi les moyens de liaison élastique, une série de cales hydro-élastiques;
- la figure 5 est une vue en coupe selon la ligne 5-5 de la figure 4 d'une des cales hydro-élastiques;
- les figures 6A, 6B et 6C sont des schémas permettant d'illustrer la différence entre les raideurs axiales et radiales d'un palier support dans lequel les angles des lames sont égaux à 45° ;
- les figures 7A, 7B et 7C sont des schémas similaires à ceux des figures 6A, 6B et 6C pour un palier support dans lequel les angles des lames sont inférieurs à 45° ; et
- les figures 8A, 8B et 8C sont des schémas similaires à ceux des figures 6A, 6B et 6C pour un mode de réalisation d'un palier support dans lequel la longueur au repos des lames est supérieure à la distance des bords qu'elles relient.

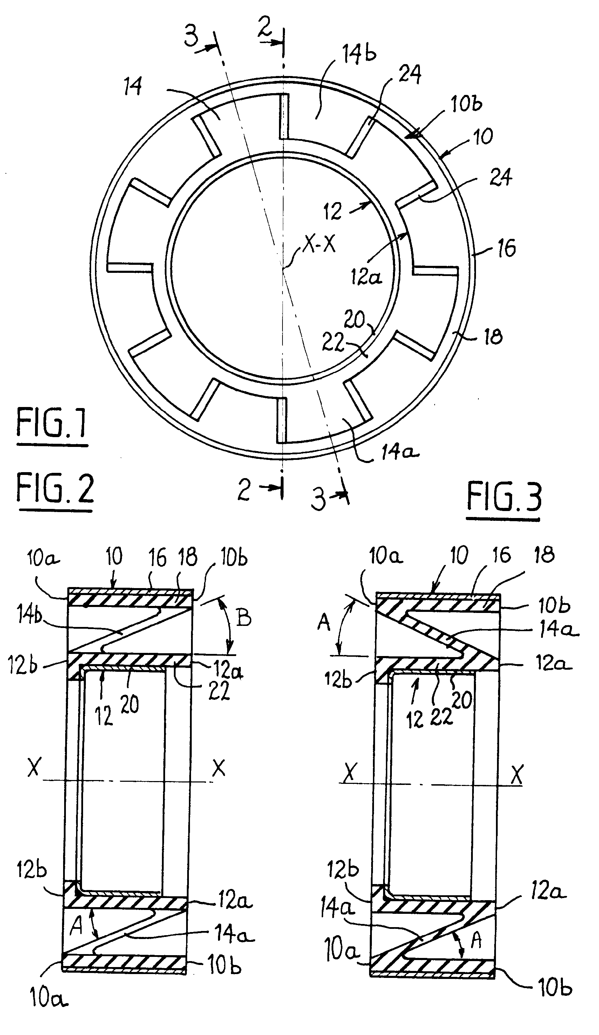

On a représenté aux figures 1 à 3 un palier support d'un arbre tournant (non représenté) comportant une bague cylindrique annulaire extérieure 10 et une bague cylindrique annulaire intérieure 12 qui, au repos, sont agencées coaxialement autour de leur axe commun X-X.

Conformément à l'invention, les deux bagues 10 et 12 sont reliées entre elles par deux séries de lames élastiques.

Un premier bord 10a de la bague extérieure 10 est relié au bord opposé axialement 12a de la bague intérieure 12 par une première série de six lames élastiques 14a.

Chacune des lames 14a est tendue entre les deux bords 10a et 12a qu'elle relie entre eux, c'est-à-dire que sa longueur est sensiblement égale à la distance séparant ses deux bords.

Le plan moyen de chacune des lames 14a forme un angle A par rapport à l'axe commun X-X.

D'une manière symétrique le second bord 10b de la bague extérieure 10 est relié au second bord, opposé axialement 12b, de la bague intérieure 12 par une seconde série de six lames élastiques 14b.

Dans ce mode de réalisation, les lames élastiques 14a et 14b sont en nombre identique, alternées et réparties angulairement de manière régulière autour de l'axe X-X de façon à délimiter entre deux lames consécutives 14a et 14b un espace ouvert 24 qui s'étend dans un plan radial contenant l'axe X-X.

La bague extérieure 10 est constituée d'une bague annulaire métallique 16 doublée d'une bague en matériau élastomère ou thermoplastique 18. De la même manière la bague intérieure 12 comporte une bague annulaire métallique 20 doublée d'une bague en matériau élastomère ou thermoplastique 22.

Dans le mode de réalisation représenté aux figures 1 à 3, les lames élastiques 14a et 14b ainsi que les bagues extérieure 18 et intérieure 22 en matériau élastomère ou thermoplastiques forment une seule et même pièce venue de moulage.

Les bagues métalliques 16 et 20 sont fixées aux bagues 18 et 22 par adhérisation ou collage.

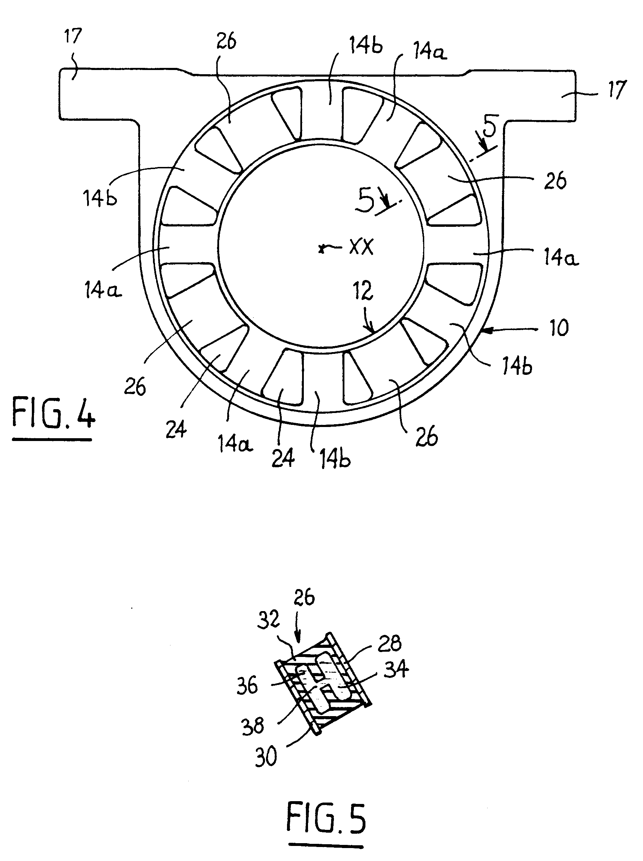

On a représenté à la figure 4 un second mode de réalisation d'un palier support. Les mêmes chiffres de référence sont utilisés pour désigner des éléments identiques eu équivalents à ceux représentés aux figures 1 à 3.

Le palier support représenté à la figure 4 diffère du précédent en ce que la bague extérieure 10 comporte deux brides de fixation 17 de formes et dimensions adaptées aux besoins, venues de matière qui permettent par exemple de relier un tel palier support à la face inférieure du plancher d'un véhicule automobile afin d'assurer le maintien d'un arbre de transmission.

On retrouve à la figure 4 des moyens de liaison élastique entre les bagues 10 et 12 constituées par deux séries de lames élastiques 14a et 14b qui sont ici chacune au nombre de quatre.

Comme on peut le constater les lames élastiques de la première série 14a sont agencées par paires autour de l'axe X-X de même que les lames 14b.

Conformément à une caractéristique de l'invention, entre deux lames consécutives d'une même série 14a, ou 14b, il est prévu une cale hydro-élastique de liaison entre les bagues 10 et 12.

Les cales hydro-élastiques 26 sont donc au nombre de quatre et comportent chacune une plaque extérieure 28 et une plaque intérieure 30 reliées entre elles par un bloc en matériau élastomère 32 à l'intérieur duquel sont formées deux chambres remplies de liquide 34 et 36 qui communiquent par un orifice de section réduite 38. L'illustration qui est donnée à la figure 5 d'une telle cale hydro-élastique est purement schématique et n'a pour but que de rappeler le principe de structure de tels éléments mais n'est en aucun cas limitative quant au type de cale hydro-élastique susceptible d'être utilisé dans cette application à un palier support selon l'invention.

L'utilisation de telles cales hydro-élastiques permet de modifier encore les caractéristiques radiales du palier support.

On décrira maintenant le mode de fonctionnement des supports d'arbre réalisés conformément aux enseignements de l'invention.

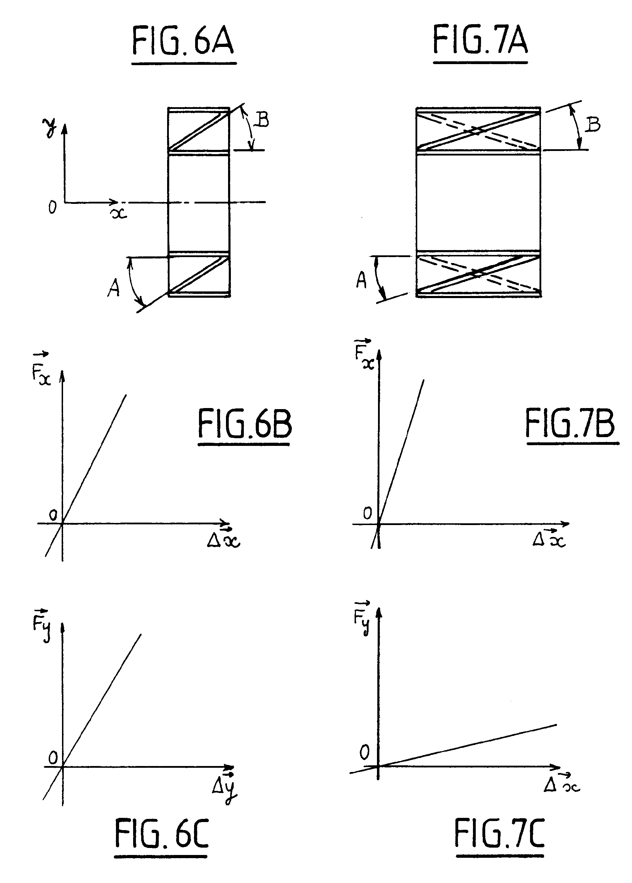

Dans le cas d'un support dont les deux séries de lames sont identiques et qui forment des angles A et B par exemple égaux sensiblement à 45°, comme cela est représenté à la figure 6A, les caractéristiques de raideurs axiales et radiales Fx et Fy peuvent être identiques.

On comprend aisément que si un arbre de transmission est fixé à la bague intérieure du support, toute sollicitation de celui-ci parallèlement à son axe X-X c'est-à-dire selon la direction Ox provoque une tension de la série de lames correspondantes qui s'opposent à tout déplacement de l'arbre de transmission, le palier support assurant donc une immobilisation axiale de l'arbre.

On a représenté aux figures 7A à 7C le comportement d'un palier support dont les deux séries de lames sont identiques et d'angles A et B égaux tous deux à environ 30°.

Comme on peut le constater la raideur axiale du palier support est nettement supérieure à la raideur radiale Fy, cette dernière permettant d'assurer une excellente filtration des vibrations de l'arbre de transmission.

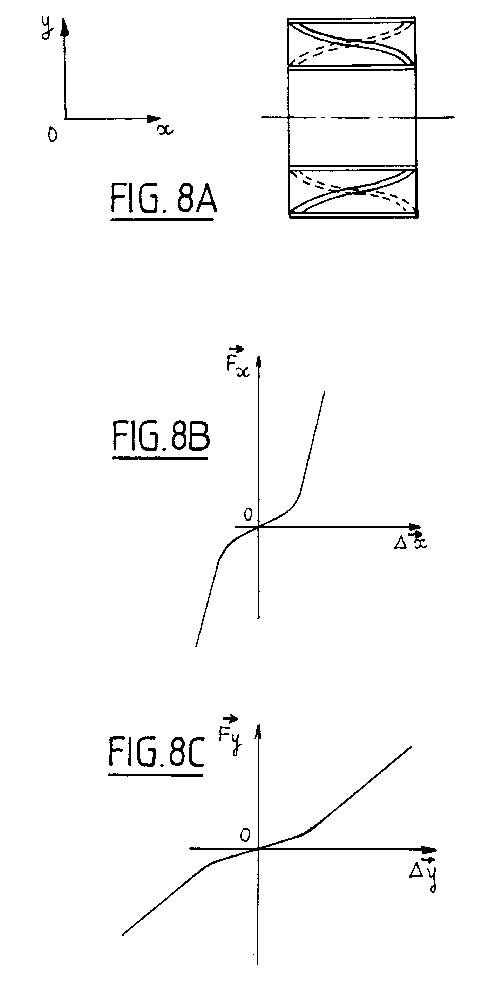

On a représenté de manière schématique à la figure 8A un palier support dont les lames élastiques des deux séries ne sont pas tendues entre les deux bagues du palier, c'est-à-dire que la longueur au repos de chacune des lames élastiques est supérieure à la distance séparant les deux bords qu'elle relie.

Dans ce cas, et compte-tenu du fait que l'angle du plan moyen de chacune des lames est sensiblement égal à 30°, on obtient les courbes caractéristiques représentées aux figures 8B et 8C pour les raideurs axiale Fx et radiale Fy de ce palier support. Ce type de palier peut être utilisé dans les transmissions longitudinales pour lesquelles on souhaite permettre un léger débattement axial de l'arbre de transmission dans une plage déterminée.

L'invention n'est pas limitée aux modes de réalisation qui viennent d'être décrits. Il est par exemple possible de faire varier le nombre des lames élastiques dans chacune des deux séries. Il est également possible de faire varier leurs répartitions angulaires autour de l'axe commun X-X par exemple en prévoyant successivement plusieurs lames d'une même série.

Il est de même possible de prévoir que deux lames opposées axialement, en considérant la figure 1, n'appartiennent pas à la même série et/ou ne possèdent pas les mêmes caractéristiques géométriques et/ou de structure. Ceci est notamment envisageable dans le cas où les paliers support selon l'invention servent à assurer le maintien d'une ligne d'arbre de transmission dont le poids propre doit être supporté à la partie inférieure de chaque palier support (en considérant les figures).

De même les lames élastiques ainsi que les bagues intérieure et extérieure peuvent être réalisées en tout matériau tel que du métal, en matière plastique, thermoplastique, élastomère, composite, etc. Un même palier support peut également comporter des lames réalisées en différents matériaux.

Dans le cas de matériaux différents, les liaisons entre les lames élastiques et les bagues peuvent être réalisées par adhérisation, collage. soudage, etc.

De plus les angles que forment les lames d'une même série peuvent varier autour de l'axe X-X et ne pas non plus être égaux aux lames correspondantes de l'autre série ceci notamment dans le but d'assurer éventuellement des rigidités axiales différentes selon la direction axiale de sollicitation du palier.

On notera enfin que le palier support réalisé conformément à l'invention permet également une réduction importante des encombrements diamétraux des paliers par rapport aux conceptions classiques à blocs en élastomère. Ce gain d'encombrement diamétral peut être très important si l'on utilise des matériaux à modules élastiques élevés pour la réalisation des lames élastiques.

Il est possible d'aménager la forme des bagues intérieures ou extérieures de façon qu'une butée en matériau plastique ou élastomère limite les déplacements axiaux ou radiaux du palier.

## Revendications

1. Palier support d'un arbre tournant du type comportant une bague intérieure (12) et une bague extérieure (10) coaxiales et entre les deux bagues des premiers moyens élastiques de liaison (14a, 14B) qui relient un premier bord (10a) de la bague extérieure (10) à un premier bord (12a), opposé axialement, de la bague intérieure (12), caractérisé en ce que lesdits premiers moyens de liaison comportent une série de premières lames élastiques (14a) réparties angulairement, le plan moyen de chacune des premières lames (14a) formant un premier angle (A) avec l'axe (X-X) commun aux deux bagues, et en ce que des seconds moyens élastiques sont réalisés sous la forme d'une série de secondes lames élastiques réparties angulairement (14b) qui relient le second bord (10b) de la bague extérieure (10) au second bord (12b) de la bague intérieure (12) de manière que le plan moyen de chacune des secondes lames forme un second angle (B) par rapport audit axe commun (X-X).

2. Palier support selon la revendication 1, caractérisé en ce que chacune des deux séries de lames élastiques (14a, 14b) comporte un nombre identique de lames élastiques.

3. Palier support selon l'une des revendications 1,ou 2, caractérisé en ce que les premières (14a) et secondes (14b) lames élastiques sont réparties de manière régulière autour dudit axe commun (X-X).

4. Palier support selon la revendication 2, caractérisé en ce que les lames (14a, 14b) de chacune des deux séries sont alternées angulairement autour dudit axe commun (X-X).

5. Palier support selon l'une quelconque des revendications 1 à 3, caractérisé en ce que l'une au moins des deux séries de lames comporte au moins un groupe de plusieurs lames agencées consécutivement autour dudit axe commun.

6. Palier support selon l'une quelconque des revendications précédentes, caractérisé en ce que le premier angle (A) et le second angle (B) sont égaux.

7. Palier support selon l'une quelconque des revendications 1 à 5, caractérisé en ce que le premier angle (A) et le second angle (B) sont différents.

8. Palier support selon l'une quelconque des revendications précédentes, caractérisé en ce que chaque lame possède une longueur au repos égale à la distance séparant les deux bords qu'elle relie.

9. Palier support selon l'une quelconque des revendications 1 à 7, caractérisé en ce que chaque lame possède une longueur au repos supérieure à la distance séparant les deux bords qu'elle relie.

10. Palier support selon l'une quelconque des revendications précédentes, caractérisé en ce que les lames et les bagues sont réalisées dans un même matériau.

11. Palier support selon la revendication 10, caractérisé en ce que les lames et les bagues sont réalisées en une seule pièce.

12. Palier support selon l'une quelconque des revendications précédentes, caractérisé en ce que lesdits moyens de liaison comportent également au moins une série de cales hydro-élastiques (26) qui relient entre elles les surfaces cylindriques en vis-à-vis des deux bagues.

13. Palier support selon la revendication 12, caractérisé en ce que chacune des cales hydro-élastiques est disposée entre deux lames élastiques (14a, 14b) consécutives.

14. Palier support selon l'une quelconque des revendications précédentes, caractérisé en ce qu'il comporte des moyens élastiques de butée pour limiter les déplacements relatifs entre les bagues intérieure et extérieure.

## Patentansprüche

1. Traglager für eine sich drehende Welle, umfassend einen Innenring (12) und einen Außenring (10), die koaxial zueinander angeordnet sind, sowie erste elastische Verbindungsmittel (14a, 14b) zwischen den beiden Ringen, welche einen ersten Rand (10a) des Außenrings (10) mit einem axial gegenüberliegenden ersten Rand (12a) des Innenrings (12) verbinden,
dadurch gekennzeichnet,
daß die ersten Verbindungsmittel einen Satz erster winkelversetzter elastischer Lamellen (14a) umfassen, wobei die mittlere Ebene jeder der ersten Lamellen (14a) mit der den beiden Ringen gemeinsamen Achse (X-X) einen ersten Winkel (A) bildet und daß zweite elastische Mittel in Form eines Satzes zweiter winkelversetzter elastischer Lamellen (14b) ausgebildet sind, die den zweiten Rand (10b) des Außenringes (10) so mit dem zweiten Rand (12b) des Innenringes (12) verbinden, daß die mittlere Ebene jeder der zweiten Lamellen bezüglich der gemeinsamen Achse (X-X) einen zweiten Wirtel (B) bildet.

2. Traglager nach Anspruch 1,
dadurch gekennzeichnet,
daß jeder der beiden Sätze elastischer Lamellen (14a, 14b) gleich viele elastische Lamellen umfaßt.

3. Traglager nach einem der Ansprüche 1 oder 2,
dadurch gekennzeichnet,
daß die ersten (14a) und zweiten (14b) elastischen Lamellen regelmäßig um die gemeinsame Achse (X-X) verteilt sind.

4. Traglager nach Anspruch 2,
dadurch gekennzeichnet,
daß die Lamellen (14a, 14b) jedes der beiden Sätze alternierend winkelversetzt um die gemeinsame Achse (X-X) angeordnet sind.

5. Traglager nach einem der Ansprüche 1 bis 3,
dadurch gekennzeichnet,
daß zumindest einer der beiden Lamellenzätze mindestens eine Gruppe mehrerer, nacheinander um die gemeinsame Achse (X-X) angeordneter Lamellen beinhaltet.

6. Traglager nach einem der vorhergehenden Ansprüche,
dadurch gekennzeichnet,
daß der erste Winkel (A) und der zweite Winkel (B) gleich groß sind.

7. Traglager nach einem der Ansprüche 1 bis 5,
dadurch gekennzeichnet,
daß der erste Winkel (A) und der zweite Winkel (B) verschieden groß sind.

8. Traglager nach einem der vorhergehenden Ansprüche,
dadurch gekennzeichnet,
daß die Länge jeder Lamelle in Ruhe gleich dem Abstand zwischen den beiden von ihr verbundenen Rändern ist.

9. Traglager nach einem der Ansprüche 1 bis 7,
dadurch gekennzeichnet,
daß die Länge jeder Lamelle in Ruhe größer als der bestand zwischen den beiden von ihr verbundenen Rändern ist.

10. Traglager nach einem der vorhergehenden Ansprüche,
dadurch gekennzeichnet,
daß die Lamellen und die Ringe ans gleichem Material ausgeführt sind.

11. Traglager nach Anspruch 10,
dadurch gekennzeichnet,
daß die Lamellen und die Ringe einstückig sind.

12. Traglager nach einem der vorhergehenden Ansprüche,
dadurch gekennzeichnet,
daß die besagten Verbindungsmittel auch zumindest einen Satz hydroelastischer Keile (26) umfassen, welche die den beiden Ringen gegenüberliegenden zylindrischen Oberflächen miteinander verbinden.

13. Traglager nach Anspruch 12,
dadurch gekennzeichnet,
daß jeder hydroelastischer Keil zwischen zwei aufeinanderfolgenden elastischen Lamellen (14a, 14b) angeordnet ist.

14. Traglager nach einem der vorhergehenden Ansprüche,
dadurch gekennzeichnet,
daß es elastische Anschlagmittel umfaßt, um die relativen Verschiebungen zwischen dem Innen- und Außenring zu begrenzen.

## Claims

1. A support bearing for a rotary shaft, of the kind comprising an inner ring (12) and an outer ring (10) coaxial with one another and which has between the two rings first resilient connecting means (14a, 14b) connecting a first edge (10a) of the outer ring (10) to an axially opposite first edge (12a) of the inner ring (12), characterized in that the first connecting means comprise a series of angularly distributed first resilient strips (14a), the mid-plane of each of the first strips (14a) forming a first angle (A) with the axis (X-X) common to the two rings, and second resilient means take the form of a series of angularly distributed second resilient strips (14b) which so connect the second edge (10b) of the outer ring (10) to the second edge (12b) of the inner ring (12) that the mid-plane of each of the second strips forms a second angle (B) in relation to said common axis (X-X).

2. A support bearing according to claim 1, characterized in that each of the two series of resilient strips (14a, 14b) comprises an identical number of resilient strips.

3. A support bearing according to one of claims 1 or 2, characterized in that the first resilient strips (14a) and the second resilient strips (14b) are distributed regularly around said common axis (X-X).

4. A support bearing according to claim 2, characterized in that the strips (14a, 14b) of each of the two series alternate angularly around said common axis (X-X).

5. A support bearing according to any of claims 1 to 3, characterized in that at least one of the two series of strips comprises at least one group of several strips arranged consecutively around said common axis.

6. A support bearing according to any of the preceding claims, characterized in that the first angle (A) and the second angle (B) are equal.

7. A support bearing according to any of claims 1 to 5, characterized in that the first angle (A) and the second angle (B) are different.

8. A support bearing according to any of the preceding claims, characterized in that each strip has a length at rest which is equal to the distance separating the two edges which it connects.

9. A support bearing according to claims 1 to 7, characterized in that each strip has a length at rest which is greater than the distance separating the two edges which it connects.

10. A support bearing according to any of the preceding claims, characterized in that the strips and the rings are produced from the same material.

11. A support bearing according to claim 10, characterized in that the strips and the rings are produced in one piece.

12. A support bearing according to any of the preceding claims, characterized in that said connecting means also comprise at least one series of hydroelastic chocks (26) which interconnect the mutually facing cylindrical surfaces of the two rings.

13. A support bearing according to claim 12, characterized in that each of the hydroelastic chocks is disposed between two consecutive resilient strips (14a, 14b).

14. A support bearing according to claim 10, characterized in that it comprises resilient stop means for limiting the relative displacements between the inner and outer rings.
